# EUROPEAN PATENT APPLICATION

(11) **EP 0 831 237 A2**
(43) Date of publication of application: **25.03.1998**
(21) Application number: 97307232.5
(22) Date of filing: 17.09.1997
(51) Int. Cl.: F04D 29/60

(54) **Fan mounting assembly**

(30) Priority: 18.09.1996 GB 9619475
(71) Applicant: Radial + Axial Group Limited, Harpenden, Hertfordshire AL5 4UN (GB)
(72) Inventor: Wehden, Ernst Fredrick, St Albans, Hertfordshire, AL1 3XQ (GB)
(74) Representative: Maury, Richard Philip

(57) **Abstract**

A fan mounting assembly comprising a base adapted to accommodate a fan, a fan motor and, if necessary, a drive guard, characterised in that the base of the assembly takes the form of a plate adapted to be mounted onto a firm surface, said plate being pre-drilled with the necessary holes and slots to accept a plurality of fan sizes and one or more sizes of adjustable motor base plate, the holes/slots for the motor base plate being so size, shaped and arranged such that the position of the motor base plate can be adjusted in a direction transverse to the longitudinal axis of the base.

## Description

### Field of the Invention

The present invention relates to a fan mounting assembly. It is particularly applicable, but in no way restricted to, a mounting assembly for fans in ventilation and air conditioning systems.

### Background to the Invention

Air handling systems are used extensively in industry and commerce these days and their use is on the increase. Many offices and workshops now have air conditioning, and ventilation systems are commonplace in a wide variety of industrial situations.

This wide variety of applications has led to a profusion of fan sizes and fan performance specifications. There is a corresponding diversity of motor sizes to drive these various fan types. The Mechanical and Electrical engineering designer or contractor will usually specify exactly the performance criteria for each element of the ventilation assembly for a particular installation. The result is that each installation becomes a "one-off" purpose-designed item.

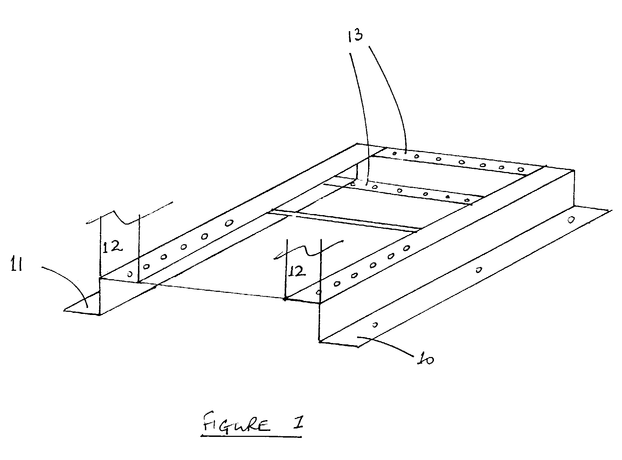

This presents the manufacturer and installation contractor with considerable difficulties since each unit consists of a fan, a fan motor, drive belt and drive belt guard and these must be mounted individually according to their size. This is currently achieved by mounting the components on a purpose-designed and purpose-built frame or base, a typical example of which is shown in Figure 1. This illustrates two parallel metal tracks or rails 10, 11. These supports are spaced apart at one end by securing them to the fan casing, shown diagrammatically as 12. Cross-members 13 are then welded or bolted in place between opposing supports to take the fan motor. The drive guard is then fitted in an *ad hoc* fashion once the assembly is complete.

It will be appreciated that this type of set-up requires either shop-floor assembly from carefully prepared drawings or, occasionally, on-site construction. In any event, this can cause problems in practice. If the designer is even slightly out with the design drawings for the base, then the components will not fit properly in place and the base must be rejected or re-worked, with attendant delays to the programme. If site construction is chosen, then fabrication equipment must be brought to site and this is costly in both time and materials.

Even after the fan and motor have been properly mounted, a drive guard may be required. These guards are normally dimensioned from the "as built" unit and are therefore manufactured specifically to order as one of the final items. Any delay in fabricating these guards can also delay the whole job.

In fact, any slippage in the programme for completing these fan unit installations leads to slippage in the commissioning programme and hence can delay the whole project.

It is the object of the present invention to overcome or reduce one or more of these problems by providing an improved fan mounting assembly.

### Summary of the Invention

According to the present invention there is provided a fan mounting assembly comprising a base adapted to accommodate a fan, a fan motor and, if necessary, a drive guard, characterised in that the base of the assembly takes the form of a plate adapted to be mounted directly onto anti-vibration mountings, said plate being pre-drilled with the necessary holes and slots to accept a plurality of fan sizes and one or more sizes of adjustable motor base plate, the holes/slots for the motor base plate being so sized, shaped and arranged such that the position of the motor base plate can be adjusted in a direction transverse to the longitudinal axis of the base.

For the first time it is possible to provide the installer with a means of mounting a variety of fans/motors on a single base. No further construction is necessary and the various components will inevitably fit perfectly, first time and every time.

Preferably the base further comprises an aperture adapted to give access to any drain plug or other access point on the fan. Any access required can be provided by creating the necessary aperture(s).

In a particularly preferred embodiment the holes and slots in the base are adapted to allow handed fan and fan motor installations, allowing even greater flexibility.

Preferably the assembly further comprises one or more of the following:- a fan, a fan motor, an adjustable motor base plate, anti-vibration mountings, drive guard, fan flexible connection, drive guard support and full fixing kit, in the form of a kit of parts.

Preferably the fan mounting assembly further incorporates a drive guard wherein the drive guard comprises a backplate and a front cover, the back plate and cover being spaced apart to accommodate the fan drive mechanism therebetween, characterised in that the backplate incorporates slotted apertures adapted to accommodate motor and fan drive shafts such that both the fan motor position and the fan position can be adjusted independently of each other on the base without the need to reposition the drive guard. Supplying and fitting the guard is therefore no longer a separate operation.

### Description of the Drawings

The invention will be further described, by way of example, with reference to the accompanying drawings in which:-
Figure 1 shows a typical prior art fan mounting;
Figures 2, 3 and 4 show plan views of fan mounting assemblies according to the present invention.
Figures 5 and 6 show plan and cross sectional views of motor bases.
Figure 7 shows a fan drive guard according to the present invention.

### Description of Preferred Embodiments

Embodiments of the present invention are now described by way of example only. These examples represent the best ways known to the Applicant of putting the invention into practice, although they are not the only ways in which this could be achieved.

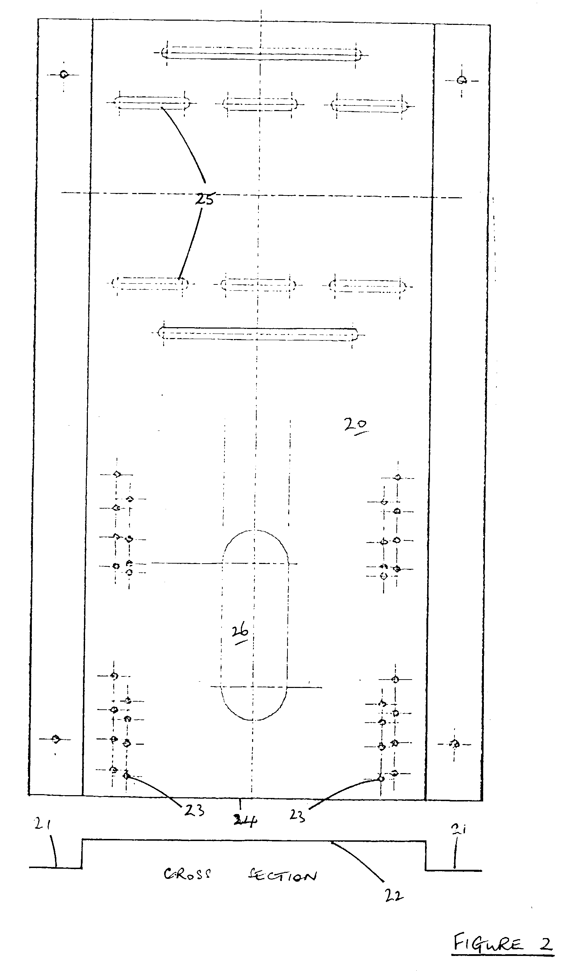

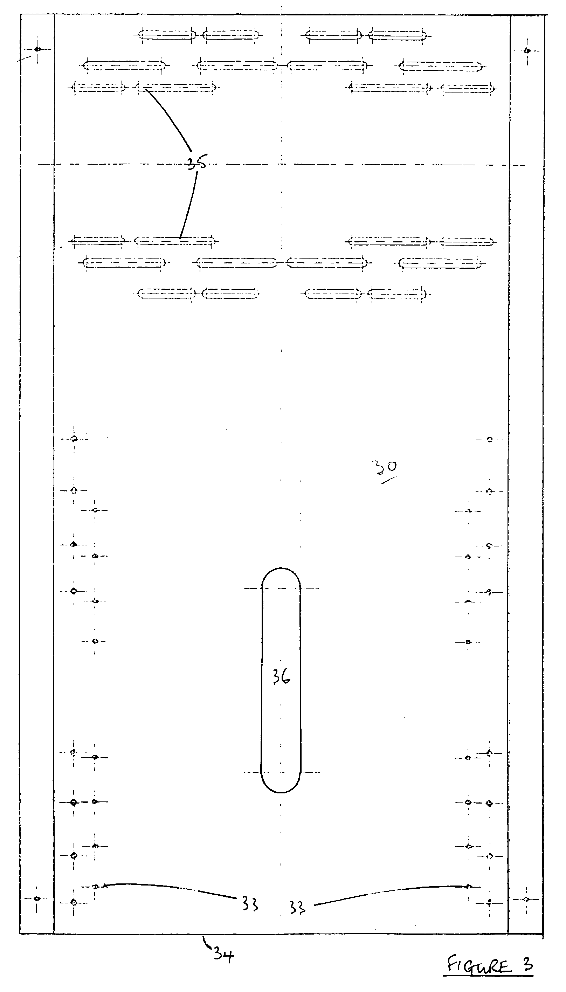

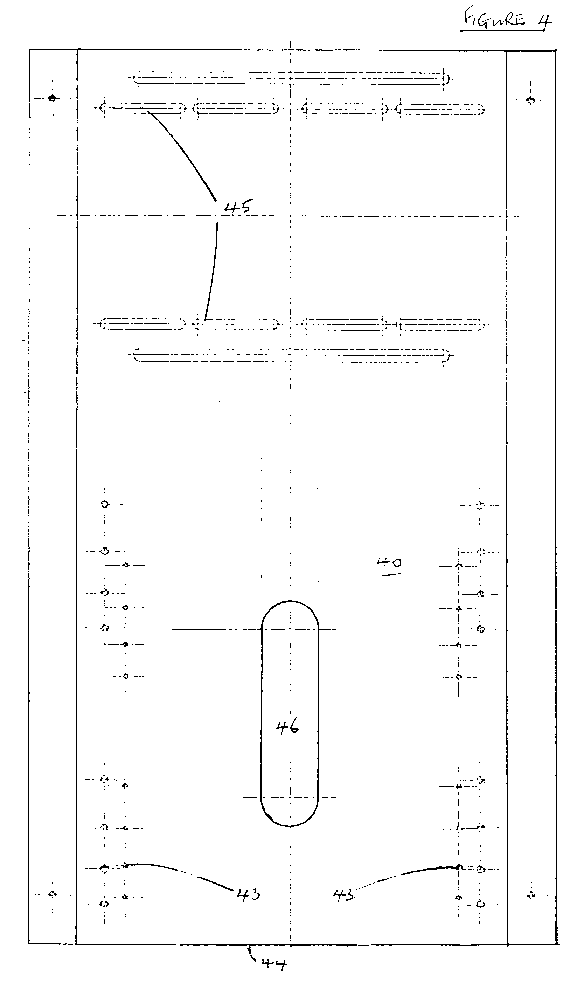

Referring to Figures 2, 3 and 4 where corresponding features are given corresponding numbers in each figure, these illustrate various versions of a fan mounting assembly plate 20, 30, 40. A typical cross-section is shown in Figure 2. However, it should be noted that other cross-sections are possible and may be desirable for larger installations where the weight of fan and motor are substantial. For example, the sides of the plate 21 where the plate is mounted could be of box construction, with the top of the box being flush with the central surface of the plate.

The raised section of the plate 22 will accommodate two more fan units and these units can be aligned in any desired configuration to suit a particular installation. That is to say, the fan can normally discharge in any chosen direction except downwards through the plate itself.

Mounting holes 23, 33, 43 are provided in the plate, these holes corresponding with the holes required to mount a range of fans. The intention is to provide the maximum flexibility for the designer and installer such that any one of a range of fans can be fitted. In a typical installation, the front face of the fan unit housing is aligned with the front edge 24, 34, 44 and the mounting holes in the fan housing will automatically line up with one or more holes in the base.

These holes can either be a clearance fit for bolts, threaded holes or have nuts secured on their underside.

Importantly, this assembly means that if, after installation, a fan unit is found not to be performing to specification, then it can be swopped for a larger or smaller unit without further engineering of the fan mounting base plate. This is a valuable feature for any installer and can result in considerable cost savings. Fans can be swopped from stock until the desired performance characteristics are obtained.

At the opposite or rear end of the plate 20, 30, 40 transverse slots 25, 35, 45 are provided to take an adjustable motor base. These slots are typically symmetrically arranged about the longitudinal access of the plate so that the fan, and hence the motor, can be mounted on either hand with respect to the plate. This is a further important feature because it means that every possible configuration of fan/motor units can be accommodated on a single base plate.

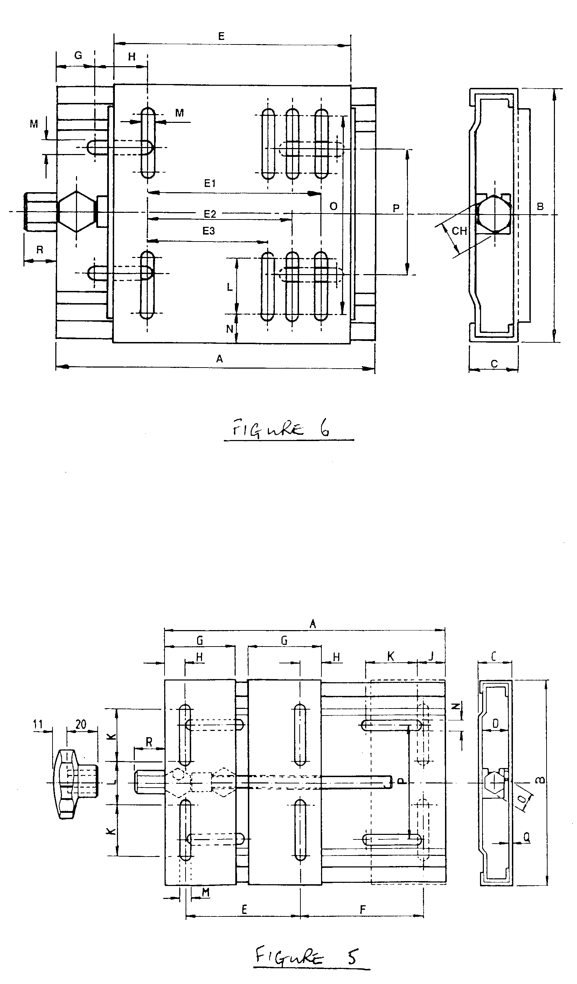

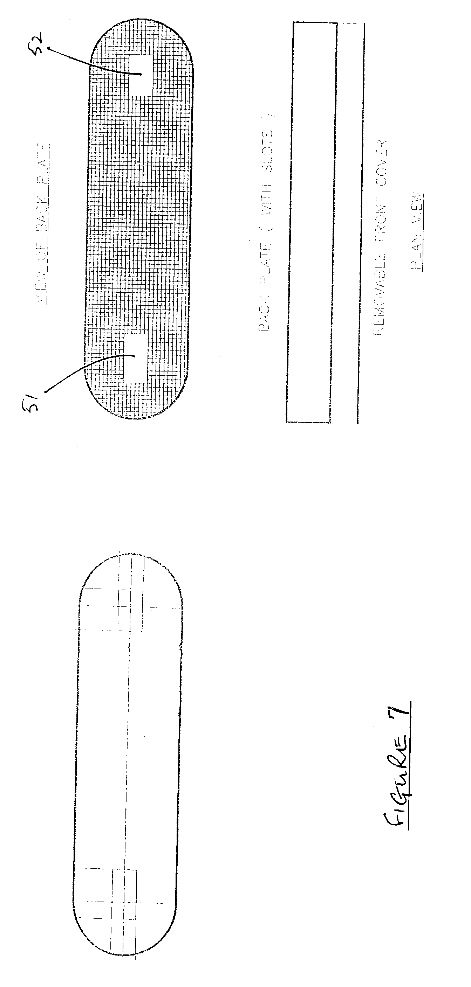

Adjustable motor bases are known per se and typical examples are the Quick-Fit and Synthesis Monoplates sold by Radial + Axial Limited as shown in Figures 5 and 6. These bases allow for in situ adjustment of the location of the motor and for maintaining absolute adjustment during the belt tensioning process.

An aperture 26, 36, 46 along the mid-line of the plate is provided to give access to a drain plug or other access point on the fan. Again, this aperture tends to be elongated to allow for various sizes of fans and discharge positions.

It will therefore be appreciated that there is provided, for the first time, a one-piece mounting assembly which will adjustably accommodate various sizes of fans and various sizes of motor whilst providing all the adjustment necessary to complete each installation. Just as the fan can be swopped if it fails to meet specification, the same is true of the motor and/or motor base.

Holes are also provided, not shown, for mounting a drive guard as shown in Figure 7. Whilst drive guards are standard fitments in certain fan installations, where Health & Safety Regulations legislate, they are usually designed to fit "as built" installations as one of the last items. This is because the guard must not only fit over the drive pulleys but must also align with the drive shafts on the fan and motor. The position of these shafts are only known for certain once the installation is complete. It has unexpectedly been discovered that by making both the shaft access points 51, 52 elongate a "standard" guard can be supplied as part of a kit of parts. On occasions, the fan and motor shafts are not the same distance away from the mounting plate and thus the drive guards 50 are not installed parallel to the plate itself. In this situation, the longitudinal axis of the slots 51, 52 are preferably aligned at an angle to the longitudinal axis of the guard plate itself (not shown). The slots are then aligned parallel with the base after installation. This allows for the full adjustment provided by the slots and the various shafts advantageously remain centrally located within these slots.

For the avoidance of doubt, this invention extends to a "kit of parts" including a fan mounting assembly plate 20, 30, 40 and one or more of the following components:- a fan, a fan motor, an adjustable motor base plate, antivibration mountings, drive guard, fan flexible connection, drive guard support and full fixing kit.

Whilst the central region of the mounting plate is shown as a flat plate in these examples, it will be appreciated that this need not necessarily be the case. It can be shaped to give additional strength e.g. by corrugation, or provided with additional supports on the underside across its width. Further apertures can be provided as and where required.

Furthermore, it will also be appreciated that, rather than a plate, the fan mounting assembly can consist of a series of cross-members moveable along two sidemembers, one at each end of the cross-members. The cross-members can be constrained such that they are slideably mounted to give the necessary adjustment and are locked in place once this has been achieved.

To the unit manufacturer this system effectively means no design, no manufacturing, no welding, no drilling, cutting or painting. It provides the fan manufacturer, for the first time, a purpose built fan mounting assembly with the flexibility described above.

## Claims

1. A fan mounting assembly comprising a base adapted to accommodate a fan, a fan motor and, if necessary, a drive guard, characterised in that the base of the assembly takes the form of a plate adapted to be mounted onto a firm surface, said plate being pre-drilled with the necessary holes and slots to accept a plurality of fan sizes and one or more sizes of adjustable motor base plate, the holes/slots for the motor base plate being so size, shaped and arranged such that the position of the motor base plate can be adjusted in a direction transverse to the longitudinal axis of the base.

2. A fan mounting assembly as claimed in Claim 1 wherein the base further comprises an aperture adapted to give access to any drain plug or other access point on the fan.

3. A fan mounting assembly as claimed in Claim 1 or Claim 2 wherein the holes and slots in the base are adapted to allow handed fan and fan motor installations.

4. A fan mounting assembly as claimed in any preceding Claim wherein the assembly further comprises a fan, a fan motor and an adjustable motor base plate

5. A fan mounting assembly as claimed in any preceding Claim incorporating a drive guard wherein the drive guard comprises a backplate and a front cover, the back plate and cover being spaced apart to accommodate the fan drive mechanism therebetween, characterised in that the backplate incorporates slotted apertures adapted to accommodate motor and fan drive shafts such that both the fan motor position and the fan position can be adjusted independently of each other on the base without the need to reposition the drive guard.
